# EUROPEAN PATENT SPECIFICATION

(11) **EP 3 250 042 B1**
(45) Date of publication and mention of the grant of the patent: **16.10.2024**
(21) Application number: 15813270.4
(22) Date of filing: 08.12.2015
(51) Int. Cl.: A23G 1/36

(54) **COMPOSITION, METHOD, USE AND PRODUCT**
ZUSAMMENSETZUNG, VERFAHREN, VERWENDUNG UND PRODUKT
COMPOSITION, PROCÉDÉ, UTILISATION ET PRODUIT

(30) Priority: 12.12.2014 GB 201422201
(43) Date of publication of application: 06.12.2017
(73) Proprietor: Barry Callebaut AG, 8005 Zurich (CH)
(72) Inventor: LANDUYT, Alex, 9280 Lebbeke-Wieze (BE); DEPYPERE, Frédéric, 9280 Lebbeke-Wieze (BE)
(74) Representative: Meissner Bolte Partnerschaft mbB
(86) International application number: PCT/EP2015/025100
(87) International publication number: WO 2016/091396

(56) References cited:
- WO-A1-99/45789
- JP-A- H06 343 391
- US-A1- 2010 323 067
- US-B1- 6 180 159
- DATABASE WPI Week 200526, Derwent World Patents Index; AN 2005-249500

## Description

This invention relates to a dispersion, to a method of producing the dispersion, to use of dispersion for a filling, coating, nut product, printing medium, or spread or texturing agent for a savoury or dessert food product, and to a savoury or dessert food product comprising the dispersion.

Most fats and oils consist of triacylglycerols which differ in their fatty acid compositions to a certain extent. The term 'fat' generally designates a solid at room temperature and 'oil' a liquid. The depot fats and organ fats of domestic animals, such as cattle and hogs, and milk fat, are important animal raw materials for fat production. Animal fats and oils comprise edible beef fat, sheep tallow, hog fat (lard), goose fat, whale oil, seal oil, and herring oil. Oils of plant origin comprise fruit pulp oils such as olive oil and palm oil, and seed oils such as coconut, palm seed, babassu oils, cocoa butter and cocoa butter substitutes, cottonseed oil, cereal germ oils and oils obtained from seeds of sunflower, soya, peanut, rapeseed, sesame, safflower, linseed, poppy and walnut (see Belitz, H.-D., Grosch, W., and P. Schieberle. Food Chemistry. 4th ed. Berlin; Heidelberg: Springer-Verlag, 2009: p. 640-653).

Cocoa butter and cocoa butter substitutes ('cocoa butter interchangeable fats' such as Illipe butter, Borneo tallow and Shea butter) are utilized preferentially in the manufacture of chocolates, candy and confections. Cocoa butter is the fat from cocoa beans. The seed germ contains up to 50-58 % of the fat, which is recovered as a by-product during cocoa manufacture. It is light yellow and has the pleasant, mild odour of cocoa. Cocoa butter typically contains 1,3-dipalmito-2-olein, 1-palmito-3-stearo-2-olein, and 1,3-distearo-2-olein in a generally constant ratio of 22:46:31 (% peak area). Cocoa butter may be mechanically pressed from cocoa nibs, centrifuged to remove any remaining solids, deodorised and finally bleached. Shea butter (Karité fat) is obtained from seeds of a tree which grows in Western Africa. Borneo tallow is obtained from the seeds of a plant native to Java, Borneo, the Philippines and India; it serves as a valuable edible fat in the tropics. Mowrah butter (often marketed as Illipe butter) is derived from a different plant (see Belitz, H.-D., Grosch, W., and P. Schieberle. Food Chemistry. 4th ed. Berlin; Heidelberg: Springer-Verlag, 2009: p. 649).

Dispersions include emulsions, foams, aerosols and suspensions. In all cases an *outer, continuous* phase is distinct from an *inner,* discontinuous, *dispersed* phase (see Belitz, H.-D., Grosch, W., and P. Schieberle. Food Chemistry. 4th ed. Berlin; Heidelberg: Springer-Verlag, 2009: p. 456). Suspensions are dispersed systems of a solid inner phase and a liquid or semi-liquid outer phase.

The constituents of a solid can be arranged in two general ways: they can form a regular repeating three-dimensional structure called a crystal lattice, thus producing a crystalline solid, or they can aggregate with no particular order, in which case they form an amorphous solid. On the basis of X-ray diffraction analyses, starch granules are said to have a semi-crystalline character, which indicates a high degree of orientation of the glucan molecules. About 70 % of the mass of a starch granule, e.g., is regarded as amorphous and about 30 % as crystalline (see Belitz, H.-D., Grosch, W., and P. Schieberle. Food Chemistry. 4th ed. Berlin; Heidelberg: Springer-Verlag, 2009: p. 316).

Particle size influences many properties of particulate materials and is a valuable indicator of quality and performance. This is true for powders, suspensions, emulsions, and aerosols. For particle size distributions (PSD) the median is called the D50. The D50 is the size in micrometre that splits the distribution with half above and half below this diameter. The Dv50 is the median for a volume distribution, Dn50 is used for number distributions, and Ds50 is used for surface distributions. Since the primary result from laser diffraction measurements is a volume distribution, the default D50 cited is the volume median and D50 typically refers to the Dv50 without including the 'v'. The span is a common calculation to quantify distribution width: (D90 - D10) / D50. Common practice is to include two points which describe the coarsest and finest parts of the distribution. These are typically the D90 and D10. Using the same convention as the D50, the D90 describes the diameter where ninety percent of the distribution has a smaller particle size and ten percent has a larger particle size. The D10 diameter has ten percent smaller and ninety percent larger. A three point specification featuring the D10, D50, and D90 will be considered complete and appropriate for most particulate materials. (see HORIBA INSTRUMENTS, Inc. A Guidebook to Particle Size Analysis. Irvine, CA, USA: 2014: p. 1, 4, 6, 10, 11).

Chocolate, compounds and fat-based confectionery fillings can be considered as suspension of solid particles dispersed in a continuous matrix of fats or oils or a mixture of both. Molten chocolate behaves as a non-Newtonian liquid, exhibiting non-ideal plastic behaviour with a shear stress and plastic viscosity. Since 1973, the International Confectionery Association (ICA) has accepted rheological measurement of molten chocolate using rotational viscometers with concentric cylinders (bob and cup geometry) and Casson equation calculation of the parameters. In 2000, ICA recommended measurement of shear stress and viscosity at shear rates between 2 s⁻¹ and 50 s⁻¹ using up and down curves in shear rate, preceded by a pre-shear at 5 s⁻¹ lasting ≥ 5 min (ICA, 2000) (see Afoakwa, E. O. et al. Comparison of rheological models for determining dark chocolate viscosity. International Journal of Food Science and Technology 2009; 44: 162-163). In the viscosity measurement of chocolate products, it is common to describe the flow properties using the Casson flow curve, which incorporates the following two parameters: (1) Yield value is the shear stress required to initiate flow of chocolate and relates to the coating or decorating characteristics: thickness and its distribution of the settled layer. (2) Plastic viscosity is a function of the shear stress required to maintain constant flow. This determines how well the chocolate will flow into a mold. To measure the Casson values, it is necessary to take laboratory viscometer readings at different speeds in order to evaluate shear stresses against different shear rates (see BROOKFIELD ENGINEERING. *Chocolate Processing* - *Laboratory Viscometer Application Data Sheet.* 2005-2014).

Fat bloom is a physical defect that appears during chocolate storage as a grayish-white film on the surface of the product. Fat bloom can be considered as a number of changes that occur over time in chocolate. These changes are primarily related to the polymorphism of cocoa butter and the migration of liquid fat. Bloom formation may result from any of the following: a polymorphic change; a transformation from a single solid phase to a mixture of a solid phase and a liquid phase; or a transformation from a single solid phase to a mixture of two solid phases. The steps or conditions underlying fat bloom include the following (see McCarthy, M. J., Reid, D. S., and D. Wei. Fat Bloom in Chocolate - New Directions in Research. The Manufacturing Confectioner 2003; 83.9: 89):
◆ Improper tempering of the chocolate.
◆ Incorrect cooling of the chocolate.
◆ Storage at elevated temperatures and/or with thermal fluctuations.
◆ Abrasion and finger marking.
◆ Fat migration from the centres of chocolate-covered confections.

GB947672 describes a method of protecting a baked pastry surface from the water content of a contacting frozen confection which comprises applying to the pastry surface a colloidal dispersion of one or more edible solid substances in an edible fat or mixture of fats in liquid form and immediately contacting the surface with the confection which is at a temperature lower than the freezing temperature of the fat so as to congeal the fat and form a protective coating on the surface.

GB1017480 refers to a method of manufacturing a novelty frozen dessert product including the steps of depositing on the interior surface of the walls of a porous pastry receptacle an edible coating material.

EP0023152 discloses a process for producing a composite edible product in which a dry edible material is separated from direct contact with a water-containing edible material, e.g. ice confection, by a relatively water-impermeable edible-fat containing layer, by applying a spray of the fat-containing material to the dry edible material before application of the water-containing edible material.

JPH09107892 relates to a low-viscosity composition for stabilizing the dispersion used in a food. This composition comprises a fine particulate microbial cellulose, obtained by hydrolysing a cellulose derived from a microorganism with a mineral acid, having ≤ 10 µm average particle diameter and containing particles having ≥ 0.1 µm particle diameter in ≥ 90 % cumulative volume.

WO2005014158 is directed towards a process for the preparation of an edible dispersion comprising oil and structuring agent and one or more of an aqueous phase and/or a solid phase, in which the dispersion is formed by mixing oil, solid structuring agent particles and the aqueous phase and/or the solid phase, wherein the solid structuring agent particles have a microporous structure of submicron size particles.

Several applications of fine particles produced using small-media milling were tested in confectionery model systems. Suspensions of sucrose in oil were shown to be relatively stable to particle reagglomeration when measured over ten weeks of storage. Inclusion of milled sucrose particles in a model dark chocolate formula showed a small influence on the perceived sweetness intensity in spite of a three-fold increase in viscosity of the melted product. Inclusion of milled sucrose particles in another model dark chocolate formula showed that the product retained more internal structure than a control product, even at temperatures at which the cocoa butter matrix is completely melted, thereby indicating that there may be some potential for enhancing the thermal stability of chocolate products using this technology (see Hess, S. Production, Characterization, and Confectionery Applications of Fine Particles Produced by Small-Media Milling. A dissertation submitted to the SWISS FEDERAL INSTITUTE OF TECHNOLOGY ZURICH for the degree of Doctor of Sciences. Doctoral Thesis ETH No. 18207. Zurich: 2009: p. VII).

European patent 2362736 pertains to the use as a dispersion structuring agent of a composition obtainable by a method comprising preparing a spray liquid comprising a structuring component, such as a fat, in a liquid state and gas in a liquefied or supercritical state distributed in the spray liquid, and expanding the mixture through an orifice. The invention also pertains to dispersion structuring agents so obtainable, edible oil-based dispersions comprising such a structuring agent, and to the use of a micronised fat powder to stabilize oil-containing dispersions.

WO2010148058 claims an improved chocolate composition comprising a nutritive carbohydrate sweetener, an emulsifier and cocoa butter, the improvement comprising the nutritive carbohydrate sweetener ranging in size from about 50 to about 1000 nm, said portion being sufficient to prevent chocolate from melting at body temperature or below.

The US 2010/323067 A1 discloses a chocolate composition and a method for manufacturing the chocolate composition include a solid material, e.g., nutritive carbohydrate sweetener that has a particle size from about 50 to about 1000 nanometers.

The WO 99/45789 A1 discloses confectioneries, and particularly reduced fat chocolates comprising an admixture of non-fat chocolate ingredients in accordance with specified particle size distribution formulae, and the method of preparation thereof.

The present applicants have sought to solve the following problems:
◆ improve structuring of fat- and/or oil-based dispersions;
◆ apply improved dispersion structure to food products.

The present invention is defined by the claims and provides
◆ a dispersion according to claim 1;
◆ the method of producing the dispersion according to claim 4;
◆ the use of the dispersion according to claim 9.

This invention provides a dispersion comprising crystalline, semi-crystalline or amorphous particles or a mixture thereof, which particles have a size range of 0.1 to 1 µm, preferably 0.1 to 0.85 µm, more preferably 0.1 to 0.7 µm, and are present in an amount of up to 50 wt.% based on the total weight of the dispersion, e.g. 1, 10 or 20 wt.%, preferably up to 8 wt.%, more preferably up to 3 wt.%., and wherein the dispersion is based on a fat or an oil. The mixture may comprise at least two fats or two oils or at least one of each. The dispersion comprises one or several chemical compounds as crystalline, semi-crystalline or amorphous particles or a mixture thereof, either within the same solid structure, *e.g*. a mixture of two crystalline or two amorphous solids, or between at least two different solid structures, e.g. a mixture of one crystalline and one amorphous solid, or a mixture of one crystalline, one semi-crystalline and/or one amorphous solid.

In a preferred embodiment, one chemical compound in one solid structure is applied, *e.g.* crystalline sucrose. In another embodiment, a mixture of crystalline sucrose and crystalline fructose or a mixture of amorphous sucrose and amorphous fructose may be provided. In a further embodiment, a mixture of crystalline sucrose and amorphous sucrose or of crystalline sucrose and amorphous fructose may be applied. According to the invention, the liquid outer phase of the dispersion comprises oils, selected form palm oil, coconut oil or sunflower oil, or melted fats, selected from cocoa butter or hydrogenated palm kernel stearin.

The particle size distribution of the dispersion is measured by laser diffraction (Malvern Instruments) and is more than 50 vol.% within a size range of 0.1 to 0.3 µm, and more than 90 vol.% within a size range of 0.1 to 1 µm. A typical particle size distribution is shown e.g. for Dispersion 3 (D3) (see Fig. 2). Both the initial Dispersion D0 as starting material without Submicron Ground Particles (SMGP) as well as the processed Dispersions D1, preferably D2, more preferably D3 with increasing amounts of SMGP are compared.

According to the invention, the dispersion comprises an emulsifier such as lecithin in an amount of of more than 1 wt.% up to 2 wt.%,. Other suitable emulsifiers may be fractionated lecithins, synthetic lecithins, hydroxylated lecithins, diacetyl tartaric acid esters of mono- and diglycerides, acetic acid esters of mono- and diglycerides, citric acid esters of mono- and diglycerides, lactic acid esters of mono- and diglycerides, monosodium phosphate derivatives of mono- and diglycerides of edible fats or oils, polysorbates, sorbitans including but not limited to sorbitan mono- or tristearate, sorbitan monolaureate, sorbitan monooelate, sorbitan monopalmitate, polyoxyethylene sorbitan monostearate and polyoxyethylene sorbitan monooleate, lactylated fatty acid esters of glycerol and propylene glycol, polyglycerol esters of fatty acids, and propylene glycol mono- and diester of fats and fatty acids. Further emulsifiers that may be used in the present invention include polyglycerol polyricinoleate, ammonium salts of phosphatidic acid, sucrose esters, sucroglycerides, and oat extract.

The particles of the dispersion may comprise organic or inorganic chemical compounds, including but not limited to a carbohydrate, carbohydrate derivative, sweetener, salt, anhydride, an ingredient of chocolate, or a mixture of any of these, e.g. two carbohydrates, one carbohydrate and one salt, one carbohydrate, one carbohydrate derivative and one anhydride, three salts, etc. The carbohydrate comprises a monosaccharide such as glucose or fructose, an oligosaccharide such as sucrose or lactose, or a polysaccharide such as starch or cellulose. A carbohydrate derivative may be an alditol such as maltitol, lactitol or sorbitol, or an aldonic, uronic or aldaric acid. A sweetener, *i.e.* a natural or synthetic compound imprinting a sweet sensation and possessing no or negligible nutritional value in relation to the extent of sweetness, comprises saccharin, cyclamate, acesulfame, aspartame or stevia. An inorganic salt comprises a carbonate, halide, phosphate or sulphate of alkali or alkaline earth metals, *e.g.* sodium chloride, potassium phosphates or calcium carbonate. An organic salt comprises *e.g.* an acetate, ascorbate, benzoate, citrate, gluconate, lactate, malate, sorbate or tartrate. An anhydride may be magnesium oxide or silicon dioxide. An ingredient of chocolate comprises cocoa powder or milk powder.

In a second aspect, this invention provides a method of producing the dispersion according to the invention, which comprises the steps of
(a) combining crystalline, semi-crystalline or amorphous particles or a mixture thereof with the oil selected from palm oil, coconut oil or sunflower oil or the melted fat selected from cocoa butter or hydrogenated palm kernel stearin;
(b)refining dispersion (a);
(c)admixing an emulsifier or a mixture of emulsifiers to (b); and
(d)milling of (c).

In another embodiment, the emulsifier or a mixture of emulsifiers may in addition be admixed to dispersion (a) before the refining step (b). An identical or different emulsifier or mixture of emulsifiers may be admixed between steps (a) and (b).

The dispersion may be refined, *e.g.* roll refined, to a D50 value of 4 to 10 µm, and milled, *e.g.* in a ball mill with beads of *e.g.* 0.1 to 0.7 mm diameter, preferably 0.2 to 0.5 mm diameter, more preferably 0.3 mm diameter, to a D50 value of less than 0.3 µm. A sequence of ball milling steps may be applied. After the first ball milling step, a D50 value of *e.g.* < 1 µm may be achieved, followed by a second step with a D50 value of < 0.5 µm, down to < 0.3 µm after a third step.

The yield value of the milled dispersion after step (d) may increase by a factor of 2 to 20 compared to the pre-milled dispersion before step (d) which is based on the oil, melted fat or mixture thereof. The plastic viscosity of the dispersion may remain constant or increase less, *i.e.* at a lower rate than the increase in yield value of the dispersion.

In another aspect, this invention provides use of the dispersion for a filling, coating, nut product, printing medium, or spread or texturing agent for a savoury or dessert food product. At room temperature, a fat- and/or oil based filling or compound coating may be obtained, which may be low in saturated fatty acids. The dispersion may be used to develop food products free of palm oil or palm kernel oil. Structured fat- and/or oil-based dispersions as claimed in this invention may reduce oiling off and oil migration to the surrounding layers in composed confectionery products, *e.g.* nut products, thereby preventing migration fat bloom. The dispersions may be used as barrier against transfer of moisture and/or fats and/or oils in food products.

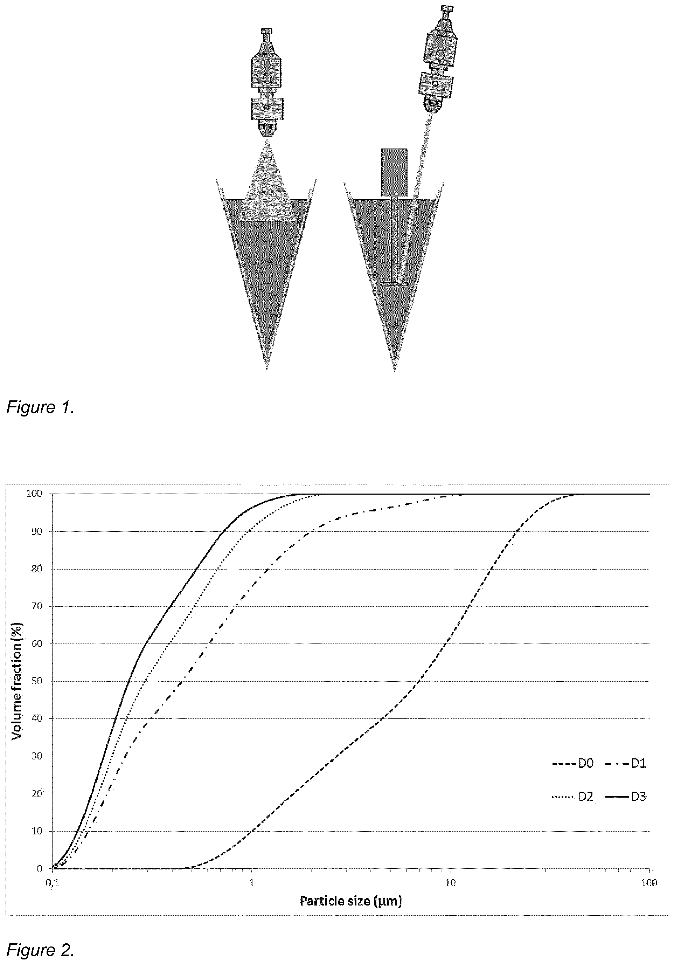

One possible method of coating food such as wafer cones by fat- and/or oil-based dispersions may be based on a spray-gun using air pressure to atomise the spray liquid (see Fig. 1, left). Another method preferably may involve the use of rotary atomisers, or spinning discs (see Fig. 1, right). Fat- and/or oil-based dispersions are pumped to the centre of the spinning disc. Through the forces of the rotating disc the liquid is broken up, ensuring that it is dispersed in droplets off the edge of the disc. The devices may be arranged as shown in Fig. 1 or alternatively in different orientations, *e.g.* horizontally.

The dispersion may be used for spray-coating onto vertical or inclined surfaces with strongly reduced or without undesired running off. Being sprayed at the inner wall of the wafer cone of an ice confection, the dispersion forms a physical barrier against moisture transfer from the ice cream to the wafer, thereby slowing down the softening of the wafer over time during frozen storage. The dispersion allows to obtain a uniform coating over the top fraction of the wafer height, further preventing coating substance accumulating in the wafer cone tip. Under the condition of no dispersion running off into the tip, the latter may be kept free for other confectionery products such as chocolate, nut fillings, any coloured and/or flavoured fat-based fillings, etc.

'Chocolate' defines a type of chocolate, *e.g.* milk chocolate, white chocolate or dark chocolate. 'Compound' refers to chocolate in which all or a part of the cocoa butter is replaced by a vegetable fat or oil such as, *e.g.,* coconut oil or Shea butter.

The dispersion may be used for a printing medium. For printing applications based *e.g.* on chocolate or a compound, the dispersion as claimed in this invention combines low viscosity with high yield value of the printing medium, thereby increasing printing resolution.

The dispersion may be used for decoration purposes, wherein a savoury or dessert food product is decorated with chocolate or a compound. A plastic viscosity of the dispersion as claimed in this invention which remains constant or increases at a lower rate than the increase in yield value makes it possible to create novel shapes of *e.g.* chocolate callets and 3D structures to decorate *e.g.* enrobed chocolate.

In a further aspect, this invention covers a savoury or dessert food product comprising the dispersion as claimed in this invention. Possible applications may include fillings, *e.g.* chocolate- or nut-based fillings, ice cream, mousse, pralines, tablets, biscuits, ice lollies or savoury crackers. Also cakes, sweet pastries, doughnuts, scones, candy bars, cotton candy, and other sweet items may be covered, including but not limited to caramels, fondant (sugar paste), hard candy, jelly candies, liquorice, marshmallow, marzipan, or taffy.

Following is a description by way of example and figures only of compositions, methods, uses and products of this invention.

Description of the Figures
- Fig. 1:: Gun-spraying technology vs. Spinning-disc spraying technology
- Fig. 2:: Cumulative particle size distribution of dispersions without Submicron Ground Particles (D0) and dispersions with increasing amounts of Submicron Ground Particles (D1 to D3).
- Fig. 3:: Spray coating recipes 1B (left) and 1I (right) applied at the inside of a wafer cone before filling with ice cream.
- Fig. 4:: Test results on chocolate printing application obtained with coating recipes 2A (top), 2B (middle) and 2C (bottom).
- Fig. 5:: Formation of dark chocolate callets from tempered chocolate recipes 3A (left) and 3E (right).
- Fig. 6:: Decoration of a milk chocolate enrobed centre with dark chocolate lines: dark chocolate recipes 3A (left) versus 3E (right).

### Example 1. An oil-based dispersion used for spray coating of a wafer cone

Starting from a composition for spray coating with 45 wt.% oil, ingredients were added to a final composition with approx. 51 wt.% oil. The composition comprises coconut oil and sunflower oil, as well as 0.55 wt.% soy lecithin as emulsifier. Table 1 shows different final recipes including the corresponding rheological data at a temperature of 40 °C, all based on the same oil composition. In order to change rheological properties, the following parameters are varied: level of lecithin, type of lecithin, amount of Submicron Ground Particles (SMGP). The SMGP were added via a separately prepared dispersion of 50 wt.% Submicron Ground (SMG) sucrose in sunflower oil.

**Table 1.**

| Recipe | wt.% oil⁺ | wt. % lecithin⁺ | wt.%⁺ SMGP⁺ | Plastic viscosity at high shear rate (mPa·s) | Casson viscosity (mPa·s) | Casson yield value (Pa) |
|---|---|---|---|---|---|---|
| 1A | 50.91 | 0.55** | 0 | 122 | 91 | 0.42 |
| 1B | 51.21 | 1.17 | 0 | 122 | 87 | 0.56 |
| 1C | 51.69 | 2.15** | 0 | 116 | 84 | 0.61 |
| 1D | 50.91 | 0.55*, ** | 0 | 201 | 131 | 1.28 |
| 1E | 51.21 | 1.17* | 0 | 190 | 121 | 1.65 |
| 1F | 51.69 | 2.03*, ** | 0 | 186 | 117 | 1.90 |
| 1G | 51.19 | 1.18 | 2.95 | 163 | 104 | 1.66 |
| 1H | 51.20 | 1.18 | 5.15 | 144 | 88 | 2.07 |
| 1I | 51.19 | 1.17 | 7.90 | 191 | 118 | 4.72 |

| | | | | | | |
|---|---|---|---|---|---|---|
| ⁺ based on total weight of the final composition * phosphatidylcholine-enriched lecithin ** not according to the invention | | | | | | |

By using Submicron Ground Particles, a higher yield value can be obtained compared to the use of lecithin. Without SMGP, an increase of lecithin content up to > 2 wt.% leads to a yield value of 0.61 Pa (native lecithin) and 1.90 Pa (phosphatidylcholine-enriched lecithin), respectively. Based on the same oil (51.2 wt.%) and lecithin content (1.2 wt.%), yield value of the final composition increases from 0.56 Pa (without SMGP) to 4.72 Pa (7.9 wt.% SMGP). It can be observed that the yield value increases at a higher rate than the plastic viscosity when moving from recipe 1B over recipes 1G and 1H to recipe 1I.

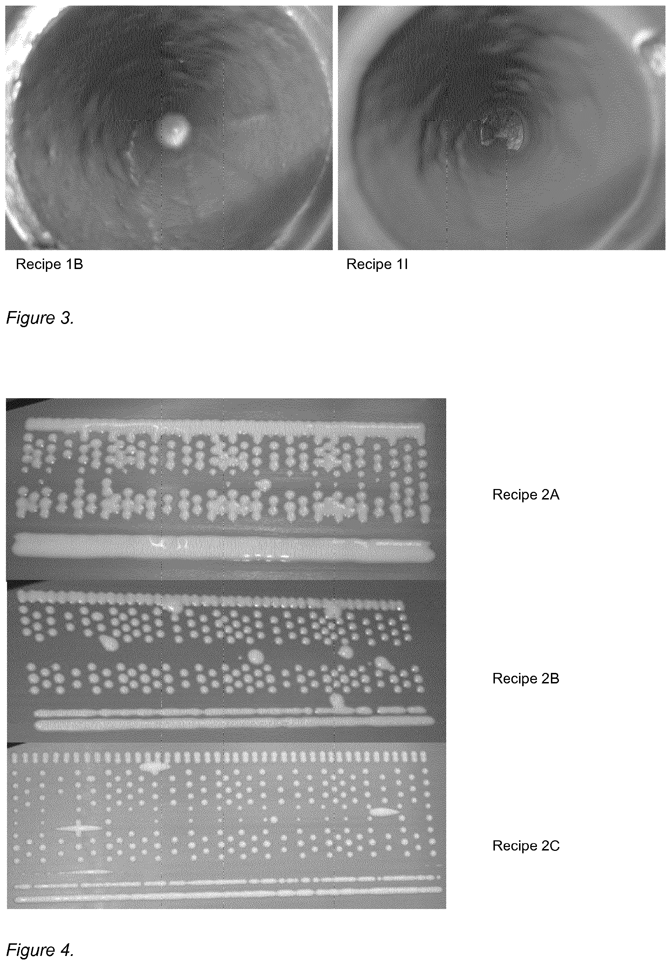

The recipes of Example 1 are used to coat the interior of an ice cone wafer. Aiming for the same weight of applied coating (6 g per cone), spraying tests are performed with recipes 1B (low yield value) and 1I (high yield value). Figure 3 shows the interior of the wafers after spray coating. Applying recipe 1B, the barrier is not perfect, and a significant amount of the coating composition has run off, down into the cone tip (see Fig. 3, left). Recipe 1I allows a more homogeneous coating over the applied surface, and the cone tip is not filled with coating dispersion (see Fig. 3, right).

### Example 2. An oil-based dispersion used for printing applications

A printing process requires a medium sufficiently low in plastic viscosity for being sprayed and sufficiently high in yield value for a satisfactory printing resolution. Taking white chocolate as basis, a fat and/or an emulsifier and/or Submicron Ground Particles are added in order to create compositions of different rheological properties. A dispersion of SMG sucrose in cocoa butter is used as SMGP source. Recipes and corresponding rheological data which are measured at 40 °C are shown in Table 2A.

**Table 2A.**

| Recipe | wt. % fat⁺ | wt.% lecithin⁺ | wt. % SMGP⁺ | Plastic viscosity at high shear rate (mPa·s) | Casson viscosity (mPa·s) | Casson yield value (Pa) |
|---|---|---|---|---|---|---|
| 2A | 51.8 | 0.05** | 0 | 266 | 196 | 0.7 |
| 2B | 51.0 | 1.50 | 0 | 257 | 179 | 1.4 |
| 2C | 51.0 | 1.46 | 8.0 | 333 | 225 | 5.4 |

| | | | | | | |
|---|---|---|---|---|---|---|
| ⁺ based on total weight of the final composition ** not according to the invention | | | | | | |

By using other types of chocolate as basis and adding a fat and/or an emulsifier and/or Submicron Ground Particles, the resulting compositions finally contain 50 wt.% fat. Recipes and corresponding rheological data which are measured at 40 °C are shown in Table 2B.

**Table 2B.**

| Recipe - type of chocolate | wt. % fat⁺ | wt. % lecithin⁺ | wt. % SMGP⁺ | Plastic viscosity at high shear rate (mPa·s) | Casson viscosity (mPa·s) | Casson yield value (Pa) |
|---|---|---|---|---|---|---|
| 2D - dark | 50 | 0.56** | 0 | 292 | 189 | 3.0 |
| 2E - dark | 50 | 0.56** | 6.4 | 318 | 194 | 7.2 |
| 2F - dark | 50 | 0.70** | 8.0 | 321 | 200 | 8.7 |
| 2G - dark | 50 | 0.98** | 0 | 293 | 178 | 4.5 |
| 2H - dark | 50 | 0.98** | 11.2 | 313 | 177 | 12.1 |
| 2I - milk | 50 | 0.98** | 0 | 308 | 219 | 2.9 |
| 2J - milk | 50 | 0.98** | 11.2 | 336 | 208 | 10.0 |
| 2K - white | 50 | 0.98** | 0 | 305 | 222 | 1.9 |
| 2L - white | 50 | 0.98** | 11.2 | 293 | 186 | 8.6 |

| | | | | | | |
|---|---|---|---|---|---|---|
| ⁺ based on total weight of the final composition ** not according to the invention | | | | | | |

According to the results as shown in Tables 2A and 2B, the yield value of the chocolate-based printing medium is significantly increased by SMGP.

A Foodjet printer (De Grood Innovations, Nijmegen, NL) is used to print tempered chocolate according to a predefined pattern. Droplets of varying size and lines are printed in order to assess the printing resolution. Droplet size and line thickness are measured with a micrometre. Applying recipe 2A the resolution obtained is not satisfactory. The diameter of the smallest droplets is measured to be 3.2 mm. The lines of 4 mm thickness flow into each other (see Fig. 4, top). The composition of recipe 2B has an intermediate yield value achieved by adding lecithin, so that an improved resolution is obtained with droplets of 2.9 mm in diameter. However, the printed lines have a thickness of about 4 mm and are not clearly separated (see Fig. 4, middle). Based on recipe 2C the best resolution with droplets of 2.1 mm in diameter and lines separated from each other is obtained (see Fig. 4, bottom). Under comparative conditions, for recipe 2C a plastic viscosity at high shear rate of 280 mPa·s and a Casson yield value of 8.0 Pa are measured. The resulting droplets are of 1.8 to 2.2 mm in diameter, accompanied by a further improved printing resolution. These resolution values were obtained by a Foodjet printer using nozzles of 0.6 mm size. Follow-up tests demonstrated that resolution can be further improved down to 1.0 mm droplet size when 0.4 mm nozzles were used. Printing media sufficiently low in plastic viscosity for being sprayed through low-diameter nozzles and sufficiently high in yield value for a satisfactory printing resolution are provided by those recipes in Tables 2A and 2B which comprise SMGP.

### Example 3. An oil-based dispersion used for chocolate decorations

Dark chocolate compositions are prepared from a low-fat dark chocolate basis. The following ingredients are used to create different recipes which all have the same final fat content (35.4 wt.%): cocoa butter, lecithin, Submicron Ground Particles. The SMGP are added via a separately prepared dispersion of 40 % SMG sucrose in melted cocoa butter. Table 3 shows the recipe details and flow rheological data, obtained at 40 °C.

**Table 3.**

| Recipe | wt.% fat⁺ | wt. % lecithin⁺ | wt.% SMGP⁺ | Plastic viscosity at high shear rate (mPa·s) | Casson viscosity (mPa·s) | Casson yield value (Pa) |
|---|---|---|---|---|---|---|
| 3A | 35.4 | 0.70** | 0 | 1550 | 959 | 10.6 |
| 3B | 35.4 | 0.94** | 1.78 | 1550 | 840 | 22.3 |
| 3C | 35.4 | 1.22 | 3.59 | 1570 | 809 | 31.5 |
| 3D | 35.4 | 1.49 | 5.30 | 1630 | 756 | 43.8 |
| 3E | 35.4 | 1.78 | 7.11 | 1810 | 735 | 59.2 |
| 3F | 35.4 | 1.22 | 0 | 1610 | 896 | 21.0 |
| 3G | 35.4 | 1.78 | 0 | 1910 | 1070 | 26.8 |

| | | | | | | |
|---|---|---|---|---|---|---|
| ⁺ based on the total weight of the final composition ** not according to the invention | | | | | | |

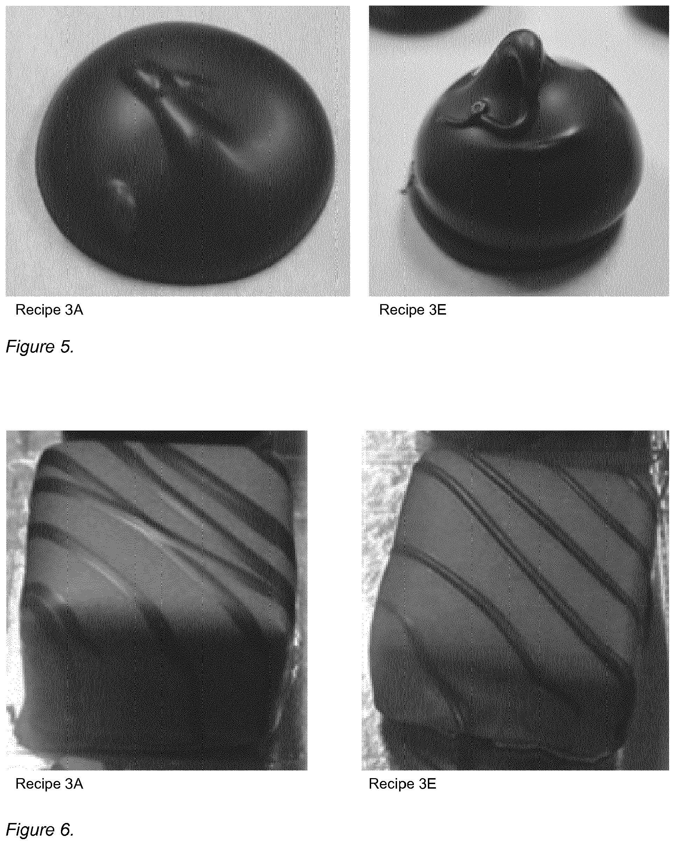

Use of SMGP leads to a substantial increase in yield value, accompanied by practically constant viscosities. An SMGP content of 3.59 wt.% in recipe 3C, *e.g.,* results in a yield value of 31.5 Pa, whereas corresponding recipe 3F without SMGP and same lecithin content has a yield value of only 21 Pa. Another example is recipe 3E with 7.11 wt.% SMGP and a yield value of 59.2 Pa, compared to recipe 3G without SMGP and same lecithin content, wherein yield value decreases to 26.8 Pa. Dark chocolate is tempered before being shaped into callets. Applying recipe 3A, callets of a conventional flat rounded shape are formed (see Fig. 5, left). The dispersion of recipe 3E, however, makes it possible to produce higher shaped callets with smaller diameter (see Fig. 5, right).

The tempered dark chocolate is also used to decorate freshly enrobed chocolate products right after a confectionery centre was enrobed with milk chocolate. With the enrobed chocolate still being present on the vibrating belt of a chocolate enrobing machine, liquid or semi-liquid milk chocolate is decorated with fine lines of dark chocolate on top. In case of recipe 3A, the dark chocolate submerges into the milk chocolate enrobing as a result of vibrations on the belt (see Fig. 6, left). By applying recipe 3E, however, it is possible to keep the 3D structured dark chocolate decorations on top of the milk chocolate enrobed centre (see Fig. 6, right).

This invention demonstrates several advantages over hitherto known fat- or oil-based dispersions. Thus, the dispersions of this invention
- show increased shape retention even at elevated temperature (above 60 °C);
- provide the development of fillings and compound coatings with reduced content of saturated fatty acids and free of palm oil;
- structure triglycerides in confectionery fillings and nut products in order to reduce oiling off and oil migration, e.g. from a nut-based centre, to surrounding chocolate layers;
- provide the development of chocolate and compound products which are less sensitive and susceptible to fat bloom in multi-layer confections;
- provide chocolate or compound products with enhanced gloss and/or hardness and/or snap;
- provide chocolate products with facilitated tempering by the presence of non-fat seed particles;
- provide compositions, compounds or formulations for spray coating of wafer cones which improve adhesion and barrier properties against moisture transfer and prevent or strongly reduce coating substance accumulating in the cone tip;
- improve printing applications of confectionery due to increased resolution;
- enable novel shapes and 3D structures for decoration purposes;
- can be economically produced on an industrial scale and provide a broad range of applicability.

## Claims

1. A dispersion comprising crystalline, semi-crystalline or amorphous particles or a mixture thereof, which particles have a size range of 0.1 to 1 µm and are present in an amount of up to 50 wt.% based on the total weight of the dispersion, wherein the liquid outer phase of the dispersion comprises oil, selected from palm oil, coconut oil or sunflower oil, or melted fats selected from cocoa butter or hydrogenated palm kernel stearin, wherein the particles have a particle size distribution of more than 90 vol.% within a size range of 0.1 to 1 µm or of more than 50 vol.% within a size range of 0.1 to 0.3 µm, and which comprises an emulsifier or a mixture of emulsifiers in an amount of more than 1 wt.% up to 2 wt.%, wherein the plastic viscosity of the dispersion remains constant or increases at a lower rate than the increase in yield value.

2. The dispersion as claimed in any preceding claim, wherein the particles comprise a carbohydrate, carbohydrate derivative, sweetener, salt, anhydride, chocolate ingredient, or a mixture of any of these.

3. The dispersion as claimed in claim 1, wherein the chocolate ingredient comprises cocoa powder or milk powder.

4. A method of producing a dispersion as claimed in any preceding claims, which comprises the steps of
(a) combining crystalline, semi-crystalline or amorphous particles or a mixture thereof with the oil selected from palm oil, coconut oil or sunflower oil or the melted fat selected from cocoa butter or hydrogenated palm kernel stearin;
(b) refining dispersion (a);
(c) admixing an emulsifier or a mixture of emulsifiers to (b); and
(d) milling of (c).

5. The method as claimed in claim 4, wherein the dispersion is refined to a D50 value of 4 to 10 µm.

6. The method as claimed in claim 4 or 5, wherein the dispersion is milled to a D50 value of less than 0.3 µm.

7. The method as claimed in claim 4, wherein the yield value of the milled dispersion after step (d) increases by a factor of 2 to 20 compared to the pre-milled dispersion before step (d).

8. The method as claimed in claim 7, wherein the plastic viscosity of the dispersion remains constant or increases at a lower rate than the increase in yield value of the dispersion.

9. Use of the dispersion as claimed in any one of claims 1 to 3 for a filling, coating, nut product, printing medium, or spread or texturing agent for a savoury or dessert food product.

10. The use as claimed in claim 9, wherein the dispersion is spray-coated and the dessert food product is an ice confection.

11. The use as claimed in claim 10, wherein the printing medium is chocolate or a compound.

12. The use as claimed in claim 11, wherein the savoury or dessert food product is decorated with chocolate or a compound.

13. A savoury or dessert food product comprising the dispersion as claimed in any one of claims 1 to 3.

## Patentansprüche

1. Dispersion, umfassend kristalline, halbkristalline oder amorphe Teilchen oder eine Mischung davon, wobei die Teilchen einen Größenbereich von 0,1 bis 1 µm aufweisen und in einer Menge von bis zu 50 Gew.-%, bezogen auf das Gesamtgewicht der Dispersion, vorhanden sind, wobei die flüssige äußere Phase der Dispersion Öl, ausgewählt aus Palmöl, Kokosnussöl oder Sonnenblumenöl, oder geschmolzene Fette, ausgewählt aus Kakaobutter oder hydriertem Palmkernstearin, umfasst, wobei die Teilchen eine Teilchengrößenverteilung von mehr als 90 Vol. % in einem Größenbereich von 0,1 bis 1 µm oder von mehr als 50 Vol. % in einem Größenbereich von 0,1 bis 0,3 µm aufweisen, und die einen Emulgator oder ein Gemisch von Emulgatoren in einer Menge von mehr als 1 Gew.-% bis zu 2 Gew.-% umfasst, wobei die plastische Viskosität der Dispersion konstant bleibt oder mit einer geringeren Rate als die Zunahme der Fließgrenze zunimmt.

2. Die Dispersion nach einem der vorhergehenden Ansprüche, wobei die Teilchen ein Kohlenhydrat, ein Kohlenhydratderivat, einen Süßstoff, ein Salz, ein Anhydrid, einen Schokoladenbestandteil oder eine Mischung aus einem dieser Bestandteile enthalten.

3. Die Dispersion nach Anspruch 1, wobei der Schokoladenbestandteil Kakaopulver oder Milchpulver umfasst.

4. Verfahren zur Herstellung einer Dispersion nach einem der vorhergehenden Ansprüche, das die folgenden Schritte umfasst
(a) Vereinigen von kristallinen, halbkristallinen oder amorphen Teilchen oder einer Mischung davon mit dem Öl, ausgewählt aus Palmöl, Kokosnussöl oder Sonnenblumenöl, oder dem geschmolzenen Fett, ausgewählt aus Kakaobutter oder hydriertem Palmkernstearin;
(b) Raffinieren der Dispersion (a);
(c) Beimischen eines Emulgators oder einer Mischung von Emulgatoren zu (b); und
(d) Mahlen von (c).

5. Verfahren nach Anspruch 4, wobei die Dispersion auf einen D50-Wert von 4 bis 10 µm gemahlen wird.

6. Verfahren nach Anspruch 4 oder 5, wobei die Dispersion auf einen D50-Wert von weniger als 0,3 µm gemahlen wird.

7. Verfahren nach Anspruch 4, wobei die Ausbeute der gemahlenen Dispersion nach Schritt (d) im Vergleich zu der vorgemahlenen Dispersion vor Schritt (d) um einen Faktor von 2 bis 20 ansteigt.

8. Verfahren nach Anspruch 7, wobei die plastische Viskosität der Dispersion konstant bleibt oder mit einer geringeren Rate zunimmt als die Zunahme der Fließgrenze der Dispersion.

9. Verwendung der Dispersion nach einem der Ansprüche 1 bis 3 für eine Füllung, einen Überzug, ein Nussprodukt, ein Druckmedium oder einen Brotaufstrich oder ein Texturierungsmittel für ein herzhaftes oder Dessert-Lebensmittelprodukt.

10. Verwendung nach Anspruch 9, wobei die Dispersion sprühbeschichtet ist und das Dessertlebensmittelprodukt ein Eiskonfekt ist.

11. Verwendung nach Anspruch 10, wobei das Druckmedium Schokolade oder eine Verbindung ist.

12. Verwendung nach Anspruch 11, wobei das kulinarische Lebensmittel oder das Dessertprodukt mit Schokolade oder einer Verbindung dekoriert ist.

13. Herzhaftes oder Dessert-Nahrungsmittelprodukt, das die Dispersion nach einem der Ansprüche 1 bis 3 enthält.

## Revendications

1. Dispersion comprenant des particules cristallines, semi-cristallines ou amorphes ou un mélange de celles-ci, lesquelles particules présentent une taille de 0,1 à 1 µm et sont présentes en une quantité allant jusqu'à 50 % en poids sur la base du poids total de la dispersion, dans laquelle la phase externe liquide de la dispersion comprend une huile sélectionnée parmi l'huile de palme, l'huile de coco ou l'huile de tournesol, ou des graisses fondues sélectionnées parmi le beurre de cacao ou la stéarine de palmiste hydrogénée, dans laquelle les particules présentent une répartition de tailles de particule de plus de 90 % en volume dans une plage de tailles de 0,1 à 1 µm ou de plus de 50 % en volume dans une plage de tailles de 0,1 à 0,3 µm, et qui comprend un émulsifiant ou un mélange d'émulsifiants en une quantité de plus de 1 % en poids jusqu'à 2 % en poids, dans laquelle la viscosité plastique de la dispersion reste constante ou augmente à une vitesse inférieure à l'augmentation du seuil de plasticité.

2. Dispersion selon une quelconque revendication précédente, dans laquelle les particules comprennent un glucide, un dérivé de glucide, un édulcorant, un sel, un anhydride, un ingrédient de chocolat, ou un mélange de ceux-ci .

3. Dispersion selon la revendication 1, dans laquelle l'ingrédient de chocolat comprend une poudre de cacao ou une poudre de lait.

4. Procédé de production d'une dispersion selon une quelconque revendication précédente, qui comprend les étapes suivantes
(a) la combinaison des particules cristallines, semi-cristallines ou amorphes ou d'un mélange de celles-ci avec l'huile sélectionnée parmi l'huile de palme, l'huile de coco ou l'huile de tournesol ou la graisse fondue sélectionnée parmi le beurre de cacao ou la stéarine de palmiste hydrogénée ;
(b) le raffinage de la dispersion (a) ;
(c) l'ajout d'un émulsifiant ou d'un mélange d'émulsifiants à (b) ; et
(d) le broyage de (c).

5. Procédé selon la revendication 4, dans lequel la dispersion est raffinée jusqu'à une valeur D50 de 4 à 10 µm.

6. Procédé selon la revendication 4 ou 5, dans lequel la dispersion est broyée jusqu'à une valeur D50 inférieure à 0,3 µm.

7. Procédé selon la revendication 4, dans lequel le seuil de plasticité de la dispersion broyée après l'étape (d) augmente d'un facteur de 2 à 20 par rapport à la dispersion pré-broyée avant l'étape (d).

8. Procédé selon la revendication 7, dans lequel la viscosité plastique de la dispersion reste constante ou augmente à une vitesse inférieure à l'augmentation du seuil de plasticité de la dispersion.

9. Utilisation de la dispersion selon l'une quelconque des revendications 1 à 3 pour une garniture, un enrobage, un produit à base de noix, un support d'impression, ou un agent de tartinage ou de texturation pour un produit alimentaire de type amuse-bouche ou dessert.

10. Utilisation selon la revendication 9, dans laquelle la dispersion est enrobée par pulvérisation et le produit alimentaire de type dessert est une confiserie glacée.

11. Utilisation selon la revendication 10, dans laquelle le support d'impression est du chocolat ou un composé.

12. Utilisation selon la revendication 11, dans laquelle le produit alimentaire de type amuse-bouche ou dessert est décoré avec du chocolat ou un composé.

13. Produit alimentaire de type amuse-bouche ou dessert comprenant la dispersion selon l'une quelconque des revendications 1 à 3.
